## Europäisches Patentamt

## European Patent Office

## Office européen des brevets

(19)

(11) Publication number: **0 168 134**
**B1**

# EUROPEAN PATENT SPECIFICATION

(12)

(45) Date of publication of the patent specification:
07.01.88

(51) Int. Cl.⁴: **C 08 L 27/12, C 08 L 51/06**

(21) Application number: **85303140.9**

(22) Date of filing: **02.05.85**

(54) Thermoplastic fluorine-containing resin compositions.

(30) Priority: **10.07.84 JP 142785/84**

(43) Date of publication of application:
**15.01.86 Bulletin 86/3**

(45) Publication of the grant of the patent:
**07.01.88 Bulletin 88/1**

(84) Designated Contracting States:
**DE FR GB IT**

(56) References cited:
**BE - A - 676 505**
**DE - A - 2 166 470**
**US - A - 3 627 840**

(73) Proprietor: **MITSUBISHI PETROCHEMICAL CO., LTD.,**
**5-2, 2-chome, Marunouchi, Chiyoda-ku Tokyo 100 (JP)**

(72) Inventor: **Horie, Shinji, c/o Mitsubischi Petrochemical**
**Co. Ltd., 1, Toho-Cho Yokkaichi-shi Mie (JP)**
Inventor: **Kakizaki, Tetsuji, c/o Mitsubischi**
**Petrochemical Co. Ltd., 1, Toho-Cho Yokkaichi-shi Mie**
**(JP)**
Inventor: **Mizutani, Toshikazu, c/o Mitsubischi**
**Petrochemical Co. Ltd., 1, Toho-Cho Yokkaichi-shi Mie**
**(JP)**

(74) Representative: **Moore, Anthony John et al, Gee & Co.**
**Chancery House Chancery Lane, London WC2A 1QU**
**(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

This invention relates to resin compositions comprising a thermoplastic fluorine-containing resin (hereinafter referred to as «fluorine resin» for brevity) and a modified ethylene polymer blended therewith.

The resin compositions have excellent electrical characteristics and are useful as molding materials.

In general, fluorine resins have excellent resistance to solvent attack and do not absorb water. Furthermore, of various synthetic resins, fluorine resins have excellent weatherability, heat resistance, abrasion resistance and non-tackiness.

Polytetrafluoroethylene (PTFE) is the representative fluorine resin polymer. PTFE is used as a corrosion resistant material for inner linings and packings in the pipes of chemical apparatus because of its high heat resistance and excellent resistance to solvent attack; an insulating material for electric cables because of its low dielectric constant and dielectric loss, and high resistivity; and a bearing or sliding material not requiring an oil supply, because of its excellenet surface lubricating properties.

However, since PTFE has a high melting point and it is difficult to fuse PTFE by heating, its moldability is poor and molding must be conducted by a sinter technique. Accordingly, the moldability of PTFE has been improved by using a copolymer comprising tetrafluoroethylene and a fluorine-containing vinyl monomer other than the tetrafluoroethylene or olefin monomer, or a fluorine resin which does not contain tetrafluoroethylene. In this way, a thermoplastic material having the characteristics of PTFE has been obtained.

Although fluorine resins have the above-described excellent characteristics they are expensive, and it is therefore generally considered that a composite of the fluorine resin and other, inexpensive material would be useful from the practical standpoint.

However, fluorine resins have a very low solubility parameter, which is a measure of compatibility, as compared with other resins, and it is difficult to compatibilize fluorine resins with other resins. No substantial investigations have been made into the compatibility of fluorine resins with olefin polymer, which is inexpensive and is widely used, and has excellent mechanical characteristics and processability.

Thermoplastic polyurethanes and polyalkyl methacrylates are known as resins having to a certain extent compatibility with fluorine resins. However, such resins are expensive as compared with the olefin polymer or exhibit consequent decrease in tensile elongation which is an important mechanical characteristic. Thus, such resins are not satisfactory for blending with a fluorine resin. Furthermore, there also has been proposed a method of blending a fluorine resin with a copolymer of an alkyl methacrylate and an olefin, this method is not general and the effect on compatibility is insufficient.

As a result of extensive investigations it has been found that ethylene polymer, which is inexpensive and is widely available, is compatible with fluorine resins, if certain specific classes of modified ethylene polymer are selected.

According to the present invention there is provided a thermoplastic fluorine-containing resin composition comprising a blend of

(a) from 5 to 95% by weight of a thermoplastic fluorine-containing resin, and

(b) from 95 to 5% by weight of modified ethylene polymer selected from

(i) modified ethylene polymer obtained by subjecting an ethylene polymer and an alkyl acrylate to graft reaction conditions, the total alkyl acrylate content including previously-contained alkyl acrylate being from 5 to 70% by weight based on the weight of the modified ethylene polymer; and

ii) modified ethylene polymer obtained by subjecting an ethylene polymer having a crystallinity of from 4 to 50% and vinyl acetate to graft reaction conditions, the total vinyl acetate content including previously-contained vinyl acetate being from 5 to 70% by weight based on the weight of the modified ethylene polymer, and the boiling xylene-insoluble content being 10% by weight or less on the same basis.

In the composition of the present invention, the components (a) and (b) are uniformly and finely compatibilized so that the inherent properties of each component are sufficiently exhibited. Even in molding the composition, layer separation, flow marks and the like do not occur, and the composition is expected to find utilisation in various fields.

Surprisingly the composition of the present invention has a larger volume resistivity than that of each of the components (a) and (b), and is therefore suitable for specific use as a coating for electrical wire.

The fluorine resins which can be used as component (a) in the present invention are commercially available products and the examples thereof include polyvinyl fluoride, polyvinylidene fluoride, polychlorotrifluoroethylene, ethylene-tetrafluoroethylene copolymer, ethylene-chlorotrifluoroethylene copolymer, tetrafluoroethylene-hexafluoropropylene copolymer, tetrafluoroethylene-propylene copolymer and tetrafluoroethylene-perfluoroalkylvinyl ether copolymer. Of these resins, polyvinyl fluoride and polyvinylidene fluoride are preferred.

Other polymers which are compatible with the fluorine resin can be blended with the fluorine resin. An exemple of such a blend is a blend of polyvinylidene fluoride and polymethyl methacrylate. Of course, various inorganic fillers, additives and pigments which are conventionally blended, may be incorporated into the blend.

The ethylene polymer used to form the component (b)(i) may be an ethylene homopolymer, a copolymer of at least 50% by weight of ethylene and α-olefin having, for example, 3 to 12 carbon atoms (e.g., propylene, butene-1, hexene-1, heptene-1, 4-methyl-pentene-1), a vinyl ester (e.g., vinyl acetate), an unsaturated carboxylic acid or derivative thereof (e.g., acrylic acid, methyl acrylate, ethyl acrylate, methyl methacrylate, maleic acid, itaconic acid or maleic anhydride), or an unsaturated organic silane (e.g., vinyl trimethoxysilane, vinyl triethoxysilane or vinyl triacetoxysilane); or an oxidazed, chlorinated or saponified derivative of these polymers. The ethylene copolymer used herein may be any random, block or graft copolymer.

Representative examples of the ethylene polymer include a low, medium or high density polyethylene, an ethylene-propylene copolymer, an ethylene-butene copolymer, an ethylene-vinyl acetate copolymer, an ethylene-acrylic acid copolymer, an ethylene-alkyl acrylate copolymer, a maleic anhydride grafted polyethylene polymer, an ethylenevinyl trimethoxysilane copolymer and γ-methacryloyloxy-propyltrimethoxysilane grafted polyethylene. Of the ethylene polymers, an ethylene-alkyl acrylate copolymer is preferred, and an ethylene-alkyl acrylate containing at least 15% by weight of alkyl acrylate is particularly preferred.

An ethylene polymer having a crystallinity of 50% or less is preferred.

The ethylene polymer can be used in powder form. However, in view of handling properties in the subsequent mold-processing, it is preferred for the ethylene polymer to be in particle form, and the particle size to be such that the material can be generally used for molding. The particle size is generally from about 1 to 8 mm and preferably from about 3 to 7 mm. The particle size does not substantially change before and after modification.

The ethylene polymer can be used alone or as a mixture of different polymers.

Various additives, inorganic fillers, coloring materials and the like which are added to conventional resins may be added to the ethylene polymer.

Examples of the alkyl acrylate include methyl, ethyl, propyl or butyl ester of acrylic acid or methacrylic acid. The methyl or ethyl ester is preferred from the standpoint of compatibility.

The alkyl acrylate may be graft copolymerized in the presence of less than 50% by weight, based on the total amount of monomer, of other vinyl monomer copolymerizable therewith.

The following effects can be obtained by additionally using such other vinyl monomer. Use of vinyl esters such as vinyl trialkyl carbonate can increase the alkali resistance. Use of acrylic acid esters having a low glass transition point such as n-butyl acrylate or 2-ethylhexyl acrylate can increase the flowability at low temperature, and when the modified ethylene polymer using the same is blended with other resin, the flowability and softness of the resin can be increased. Use of unsaturated organic acids such as maleic anhydride or acrylic acid can increase the bonding and adhesive properties with polar resins, metals and the like. Use of halogenated unsaturated hydrocarbons such as vinyl chloride or vinylidene chloride can increase the adhesive properties with halogenated resins.

In the graft reaction, the formation of gel in the modified ethylene polymer can be prevented by using from 0.01 to 10% by weight based on the weight of the reactive vinyl monomer of a radical generator and also from 0.01 to 10% by weight based on the weight of the radical generator of a chain transfer agent and from 0.001 to 10% by weight based on the weight of the radical generator of a polymerization inhibitor.

It es preferred that gel is not substantially formed in the graft modification reaction. However, if the boiling xylene insoluble component is 10% by weight or less, preferably 1% by weight or less, no problems arise in connection with the mold-processability and blending characteristics.

The boiling xylene-insoluble content is measured by the following method:

3.0 g of sample particles are wrapped in a 200 mesh stainless steel net and are extracted with boiling xylene in a Soxhlet extractor fo 10 hours. The weight proportion of the insoluble content retained in the net to the weight of the sample particles is then measured.

A typical graft reaction product is a product obtained by grafting an appropriate amount of an alkyl acrylate onto at least one polymer selected from the above-described ethylene polymers or a product obtained by diluting the grafted product with the same or a different ungrafted ethylene polymer.

The grafting method which can be used may be, for example, solution grafting, melt grafting, aqueous suspension grafting or radiation grafting. From the standpoints of uniform dispersion of the alkyl acrylate and inhibition of gelation, aqueous suspension grafting as described in US Patent Specification No. 4 097 554 is preferred. These graft reactions may be conducted by conventional methods.

The amount of the alkyl acrylate grafted is such that the total alkyl acrylate content including previously-contained alkyl acrylate is from 5 to 70% by weight, preferably from 10 to 65% by weight, based on the weight of the modified ethylene polymer. If the amount thereof is less than 10% by weight, compatibility is deficient, and if the amount thereof is more than 70% by weight, moldability is poor.

The modified ethylene polymer has good mold-processability, improved viscosity temperature dependence and substantially the same crystallization initiating temperature as that of the ethylene polymer, so that a thin product such as a film can be easily produced by molding. Furthermore, since the components have uniform quality, ductility, mechanical strength and the like do not deteriorate.

The modified ethylene polymer (b) (i) can contain other polymers, inorganic fillers, stabilizers and colorants, as long as these materials do not disturb the effect of the present invention.

Representative examples of other polymers being contained are a blend of the modified ethylene polymer with an ethylene-vinyl acetate copolymer, an ethylene-ethyl acrylate copolymer or other ethylene polymer.

The ethylene polymer used for forming component (b)(ii) is an ethylene polymer having a crystallinity of from 4 to 50% and preferably from 10 to 45%. The crystallinity used herein is a value obtained by X-ray analysis.

The type and form of the ethylene polymer as the component (b)(ii) are the same as described for the ethylene polymer of the component (b)(i). For example, an ethylene homopolymer having a density of 0.923 $g/cm^3$ or less is included therein. Furthermore, in the case of the ethylene copolymer, the crystallinity thereof varies depending on the copolymerized component. For example, in the copolymer of ethylene and vinyl acetate, if the vinyl acetate introduced therein is 8% by weight or more, the crystallinity is 50% or less. A particularly preferred example is an ethylene-vinyl acetate copolymer having a vinyl acetate content of 20% by weight or more.

If the crystallinity is more than 50%, diffusion in the case of vinyl acetate impregnation is difficult, and it is difficult to obtain a uniformly graft-modified product. If the crystallinity is less than 4%, mold processability is poor.

The vinyl acetate used in the present invention may be a commercially available product. In addition, a mixture of vinyl acetate and 50% by weight or less of other vinyl monomer copolymerizable therewith may also be used.

The graft reaction coonditions, formation of gel and the like are the same as described in the case of component (b)(i). Furthermore, in this case, aqueous suspension grafting is preferred from the standpoint of inhibiting gel formation.

The modified ethylene polymer (b)(ii) obtained by subjecting to such graft reaction conditions has a total vinyl acetate content, including vinyl acetate previously contained in the ethylene polymer, of from 5 to 70% by weight, and preferably from 10 to 65% by weight, based on the weight of the modified ethylene polymer. If the vinyl acetate content is less than 5% by weight, compatibility is deficient and if the vinyl acetate content is more than 70% by weight, moldability is poor.

If the ethylene polymer is an ethylene-vinyl acetate polymer, the amount of vinyl acetate added by the graft reaction conditions is from 3 to 60% by weight, preferably from 5 to 55% by weight, and more preferably from 10 to 50% by weight, based on the weight of the modified polymer (b)(ii).

The modified ethylene polymer (b)(ii) can similarly contain other polymers, inorganic fillers, stabilizers, colorants, as long as those materials do not disturb the effect of the present invention. Representative examples of other polymers being contained are blends of the modified ethylene polymer and an ethylene-vinyl acetate copolymer, an ethylene-ethyl acrylate copolymer or other ethylene polymer.

The modified ethylene polymers (b)(i) and (b)(ii) obtained above have good mold processability, improved viscosity temperature dependence and substantially the same crystallization initiating temperature as in the ethylene polymer so that a thin product such as a film can be easily produced by molding. Further, since the components have the uniform quality, the ductility, mechanical strength and the like do not deteriorate.

As mentioned, the proportions of component (a) and components (b)(i) and/or (b)(ii) are such that the fluorine resin as component (a) is from 5 to 95% by weight, preferably from 10 to 90% by weight, and the modified ethylene polymer as components (b)(i) and/or (b)(ii) is from 95 to 5% by weight, preferably from 90 to 10% by weight. If the amount of each component is outside the above ranges, a uniform composition cannot be obtained. The effect which can be expected according to the present invention varies depending on the blending proportions. For example, if the fluorine resin is the main component and the modified ethylene polymer is added, the improvement of softness, particularly elongation, is the important effect achieved. On the other hand, if the modified ethylene polymer is the main component and the fluorine resin is added, the improvement of heat resistance, which is a defect of the modified ethylene polymer, is the important effect achieved.

In view of the fact that the fluorine resin and modified ethylene polymer have a good compatibility, a composition according to the present invention can be used to form a laminate. Furthermore, the composition according to the present inventin can be used to form a layer of a multi-layer laminate film or sheet having one or more additional layers formed of other resins.

The compatibility of the compounds (a) and (b) achieved by the composition of the present invention allows the burrs from such laminates to be recycled, thus reducing production costs. The recycled resin may be added to the modified ethylene polymer or to the fluorine resin provided that the amount of addition is not such as to impair the effects achieved by the present invention.

The present invention will now be explained in greater detail by reference to the following Examples.

PREPARATION EXAMPLE 1

A 50 liter autoclave was charged with 20 kg of purified water, 0.6 kg of calcium tertiary phosphate and 0.6 g of sodium dodecylbenzenesulfonate to prepare an aqueous medium. 7 kg of an ethylene-ethyl acrylate copolymer (MFR: 20 g/10 min, ethyl acrylate content: 18% by weight) having a particle diameter of 3 to 4 mm was added to the medium, followed by stirring to suspend.

Separately, 30 g of t-butyl peroxy (2-ethyl hexanoate) was dissolved in 3 kg of ethyl acrylate. The resulting solution was added to the suspension system prepared above.

The atmosphere of the system was replaced by introducing nitrogen into the autoclave. The temperature in the autoclave was elevated to 60°C and the system was allowed to stand at this temperature for 5 hours while stirring to impregnate ethyl acrylate containing the polymerization initiator into ethylene-ethyl acrylate copolymer particles.

The temperature of the resulting suspension was elevated to 80°C and the suspension was allowed to stand at this temperature for 5 hours while stirring to conduct polymerization. The temperature was further elevated to 90°C and the system was maintained for 3 hours to complete the polymerization.

After cooling, the contents were taken off and washed with water to obtain 10 kg of ethyl acrylate-modified ethylene-ethyl acrylate copolymer particles. The ethyl acrylate content in the modified ethylene-ethyl acrylate copolymer obtained was 43% by weight. The boiling xylene insoluble content was 0% by weight.

EXAMPLES 1 TO 5 AND COMPARATIVE EXAMPLES 1 TO 4

The modified ethylene polymer obtained in Preparation Example 1 and a polyvinylidene fluoride («Kynar 720», a product of Pennwalt Co., density: 1.75 g/cm³, melting point: 173.7°C) were mixed in the proportions as shown in Table 1 below and the resulting mixture was melt kneaded and pelletized using a 30 cm twin-screw extruder at 200°C.

The resin composition was sampled and subjected to ion etching to observe the dispersion state using a scanning-type electron microscope. It was observed that the composition showed a uniform dispersion of 1 μm or less over the entire region.

The evaluation results are shown in Table 1 below.

## COMPARATIVE EXAMPLE 5

A low density polyethylene («Yukalon LM31, a product of Mitsubishi Petrochemical Co., density: 0.918 g/cm³, melt flow rate (MFR): 8.0 g/10 min) and the same polyvinylidene fluoride as used in Example 1 were kneaded in the equal weight proportion under the same conditions as in Example 1.

The dispersion state of the resin composition was observed and it was found that the composition showed an non-uniform dispersion of about 1 to 50 μm.

The evaluation results are shown in Table 1 below.

## COMPARATIVE EXAMPLE 6

The same ethylene-ethyl acrylate copolymer as used in Preparation Example 1 and the same polyvinylidene fluoride as used in Example 1 were kneaded in the same manner as in Comparative Example 5.

The dispersion state of the resin composition obtained was observed. The composition showed an ununiform dispersion of about 10 μm.

The evaluation results are shown in Table 1 below.

## COMPARATIVE EXAMPLE 7

An ethylene-ethyl acrylate copolymer (ethyl acrylate content: 40 wt%, MFR: 7 g/10 min) and the same polyvinylidene fluoride as used in Example 1 were kneaded in the same manner as in Comparative Example 5. At this time, the ethylene-ethyl acrylate copolymer was heat melted at the resin feed inlet of the extruder and the kneading was not conducted smoothly.

Only a slight amount of the resin composition was obtained and the dispersion state of the composition was observed. The composition showed an ununiform dispersion of about 10 μm.

The evaluation results are shown in Table 1 below.

The evaluations are according to the following methods.

*Compatibility*

Uniform dispersion of about 1 μm: good
Ununiform dispersion of about 10 μm: poor

*Elongation at break*

According to JIS K6760.

TABLE 1

| | Composition | | | | | Melt knead-ability | Compat-ibility | Elongation at break |
|---|---|---|---|---|---|---|---|---|
| | Modified ethylene polymer | Polyvinyl-idene fluoride | Low density polyethylene | EEA (EA content: 18 wt%) | EEA (EA content: 40 wt%) | | | |
| | (wt%) | (wt%) | (wt%) | (wt%) | (wt%) | | | (%) |
| Comparative Example 1 | — | 100 | — | — | — | Easy | — | 60 |
| Comparative Example 2 | 2 | 98 | — | — | — | Easy | Poor | 60 |
| Example 1 | 5 | 95 | — | — | — | Easy | Good | 110 |
| Example 2 | 25 | 75 | — | — | — | Easy | Good | 120 |
| Example 3 | 50 | 50 | — | — | — | Easy | Good | 450 |
| Example 4 | 75 | 25 | — | — | — | Easy | Good | 625 |
| Example 5 | 95 | 5 | — | — | — | Easy | Good | 800< |
| Comparative Example 3 | 98 | 2 | — | — | — | Easy | Poor | 800< |
| Comparative Example 4 | 100 | — | — | — | — | Easy | — | 800< |
| Comparative Example 5 | — | 50 | 50 | — | — | Easy | Poor | ~0 |
| Comparative Example 6 | — | 50 | — | 50 | — | Easy | Poor | ~0 |
| Comparative Example 7 | — | 50 | — | — | 50 | Difficult | Poor | ~0 |

EEA: Ethylene-ethyl acrylate copolymer    EA: Ethyl acrylate

## PREPARATION EXAMPLE 2

A 50 liter autoclave was charged with 20 kg of purified water, 0.6 kg of calcium tertiary phosphate as a suspending agent and 0.6 g of sodium dodecylbenzenesulfonate to prepare an aqueous medium. 7 kg of an ethylene-vinyl acetate copolymer («X-700», a product of Mitsubishi Petrochemical Co., MFR: 30 g/10 min, vinyl acetate content: 33% by weight, crystallinity: 15%) having a particle diameter of 3 to 4 mm was added to the medium and the resulting mixture was stirred to suspend.

Separately, 30 g of t-butyl peroxypivalate and 6.75 g of benzoyl peroxide were dissolved in 3 kg of vinyl acetate. The resulting solution was added to the suspension prepared above.

The atmosphere of the system was replaced by introducing air into the autoclave and a pressure of 0.5 $kg/cm^2G$ was applied thereto. The temperature in the autoclave was elevated to 50°C and the system was allowed to stand at this temperature while stirring to impregnate vinyl acetate containing the polymerization initiator into the ethylene-vinyl acetate particles.

The temperature of the resulting suspension was elevated to 60°C and the suspension was allowed to stand at this temperature for 5 hours while stirring to conduct polymerization. The temperature was further elevated to 90°C and the system was maintained for 5 hours to complete the polymerization.

After cooling, the contents were taken out and washed with water to obtain 10 kg of vinyl acetate-modified ethylene-vinyl acetate copolymer particles. The vinyl acetate content in the modified ethylene-vinyl acetate copolymer obtained was 53% by weight. The boiling xylene insoluble content was 0% by weight.

## EXAMPLES 6 TO 8 AND COMPARATIVE EXAMPLE 8

The modified ethylene polymer as obtained in Preparation Example 2 and the same polyvinylidene fluoride as used in Example 5 were mixed in the proportions as shown in Table 2 below and the resulting mixture was pelletized in the same manner as in Example 1.

The dispersion state of the resin composition obtained was observed. The composition showed a uniform dispersion of 1 μm or less over the entire region.

The evaluation results are shown in Table 2 below.

## COMPARATIVE EXAMPLE 9

The same low density polyethylene as used in Comparative Example 5 and the same polyvinylidene fluoride as used in Example 1 were kneaded in the equal weight proportion under the same conditions as in Example 1.

The evaluation results of the resin composition obtained are shown in Table 2 below.

## COMPARATIVE EXAMPLE 10

An ethylene-vinyl acetate copolymer («Evaflex® EV 170», a product of Mitsui Polychemical Co., vinyl acetate content: 33 wt%, MFR: 1.2 g/10 min) and the same polyvinylidene fluoride as used in Example 1 were kneaded in the same manner as in Comparative Example 8.

The evaluation results of the composition are shown in Table 2 below.

## COMPARATIVE EXAMPLE 11

An ethylene-vinyl acetate copolymer containing a large amount of vinyl acetate («Evaflex 45LX», a product of Mitsui Polychemical Co., vinyl acetate content: 45 wt%, MFR: 5.0 g/10 min) and the same polyvinylidene fluoride as used in Example 1 were kneaded in the same manner as in Comparative Example 8. At this time, the ethylene-vinyl acetate copolymer was heat melted at the resin feed inlet of the extruder and the kneading was not conducted smoothly.

The evaluation results of the composition obtained in a small amount are shown in Table 2 below.

The volume resistivity was measured according to ASTM D257.

TABLE 2

| | Composition | | | | | Melt knead-ability | Compat-ibility | Elonga-tion at break | Volume resistivity |
|---|---|---|---|---|---|---|---|---|---|
| | Modified ethylene polymer | Polyvinyl-idene fluoride | Low density polyethylene | EVA (VA content: 33 wt%) | EVA (VA content: 45 wt%) | | | | |
| | (wt%) | (wt%) | (wt%) | (wt%) | | | | (%) | (Ω.cm) |
| Comparative Example 1 | — | 100 | — | — | — | Easy | — | 60 | $2 \times 10^{14}$ |
| Example 6 | 25 | 75 | — | — | — | Easy | Good | 100 | $2 \times 10^{15}$ |
| Example 7 | 50 | 50 | — | — | — | Easy | Good | 325 | $6 \times 10^{15}$ |
| Example 8 | 75 | 25 | — | — | — | Easy | Good | 475 | $7 \times 10^{15}$ |
| Comparative Example 8 | 100 | — | — | — | — | Easy | Good | 800< | $5 \times 10^{13}$ |
| Comparative Example 9 | — | 50 | 50 | — | — | Easy | Poor | ~0 | — |

TABLE 2 (continuation)

| | Composition | | | | | Melt knead-ability | Compat-ibility | Elonga-tion at break | Volume resistivity |
| | Modified ethylene polymer | Polyvinyl-idene fluoride | Low density polyethylene | EVA (VA content: 33 wt%) | EVA (VA content: 45 wt%) | | | | |
| | (wt%) | (wt%) | (wt%) | (wt%) | | | | (%) | ($\Omega$.cm) |
| Comparative Example 10 | — | 50 | — | 50 | — | Easy | Poor | ~0 | — |
| Comparative Example 11 | — | 50 | — | — | 50 | Difficult | Poor | ~0 | — |

EVA: Ethylene-vinyl acetate copolymer     VA: Vinyl acetate

It is apparent from the results shown in Tables 1 and 2 that the present invention is particularly effective to obtain a composition wherein the components are uniformly and finely compatibilized, having excellent electrical characteristics and good kneadability without impairment of mechanical characteristics.

**Claims**

1. A thermoplastic fluorine-containing resin composition characterized in that the composition is a blend comprising
   (a) from 5 to 95% by weight of a thermoplastic fluorine-containing resin, and
   (b) from 95 to 5% by weight of modified ethylene polymer selected from
   (i) modified ethylene polymer obtained by subjecting an ethylene polymer and an alkyl acrylate to graft reaction conditions, the total alkyl acrylate content, including previously-contained alkyl acrylate being from 5 to 70% by weight based on the weight of the modified ethylene polymer; and
   ii) modified ethylene polymer obtained by subjecting an ethylene polymer having a crystallinity of from 4 to 50% and vinyl acetate to graft reaction conditions, the total vinyl acetate content including previously-contained vinyl acetate being from 5 to 70% by weight based on the weight of the modified ethylene polymer and the boiling xylene-insoluble content being 10% by weight or less on the same basis.

2. A composition as claimed in claim 1, wherein the blend comprises from 10 to 90% by weight of the fluorine-containing resin (a), and from 90 to 10% by weight of the modified ethylene polymer (i) and/or (ii).

3. A composition as claimed in claim 1 or 2, wherein the fluorine-containing resin (a) is selected from polyvinyl fluorides and polyvinylidene fluorides.

4. A composition as claimed in claim 1 or 2, wherein the fluorine-containing resin (a) is a blend of a polyvinylidene fluoride and a polymethyl methacrylate.

5. A composition as claimed in any precending claim, wherein the ethylene polymer used to form the modified ethylene polymer (b)(i) has a crystallinity of 50% or less.

6. A composition as claimed in any preceding claim, wherein the ethylene polymer used to form the modified ethylene polymer (b)(i) is an ethylene-alkyl acrylate copolymer.

7. A composition as claimed in claim 6, wherein the ethylene-alkyl acrylate copolymer has an alkyl acrylate content of 15% by weight or more.

8. A composition as claimed in any preceding claim, wherein the modified ethylene polymer (b)(i) is obtained by graft reaction with a methyl or ethyl ester of acrylic acid or methacrylic acid.

9. A composition as claimed in any preceding claim, wherein the modified ethylene polymer (b)(i) is substantially gel-free.

10. A composition as claimed in any preceding claim, wherein the total alkyl acrylate content of the modified ethylene polymer (b)(i) is from 10 to 65% by weight.

11. A composition as claimed in any preceding claim, wherein the ethylene polymer used to form the modified ethylene polymer (b)(ii) has a crystallinity of from 10 to 45%.

12. A composition as claimed in any preceding claim, wherein the ethylene polymer used to form the modified ethylene polymere (b)(ii) is an ethylene-vinyl acetate copolymer having a vinyl acetate content of 20% by weight or more.

13. A composition as claimed in any one of claims 1 to 11, wherein the total vinyl acetate content of the modified ethylene polymer (b)(ii) is from 10 to 65% by weight.

**Patentansprüche**

1. Thermoplastische, Fluor enthaltende Harzzusammensetzung, dadurch gekennzeichnet, dass die Zusammensetzung eine Mischung ist, umfassend
   (a) 5-95 Gew.-% eines thermoplastischen, Fluor enthaltenden Harzes und
   (b) 95-5 Gew.-% eines modifizierten Ethylenpolymerisats gewählt aus
   (i) modifiziertes Ethylenpolymerisat, dadurch erhalten, dass man ein Ethylenpolymerisat und ein Alkylacrylat den Bedingungen einer Pfropfreaktion unterzieht, wobei der gesamte Alkylacrylatgehalt, einschliesslich vorher enthaltenem Alkylacrylat 5 bis 70 Gew.-% beträgt, bezogen auf das Gewicht des modifizierten Ethylenpolymerisats; und

(ii) modifiziertes Ethylenpolymerisats, dadurch erhalten, dass man ein Ethylenpolymerisat mit einer Kristallinität von 4 bis 50% und Vinylacetat den Bedingungen einer Pfropfreaktion unterzieht, wobei der gesamte Vinylacetatgehalt, einschliesslich vorher enthaltenem Vinylacetat 5 bis 70 Gew.-% beträgt, bezogen auf das Gewicht des modifizierten Ethylenpolymerisats und wobei der Gehalt an in siedendem Xylol unlöslichem Material 10 Gew.-% oder weniger beträgt, bezogen auf die gleiche Basis.

2. Zusammensetzung nach Anspruch 1, wobei die Mischung 10 bis 90 Gew.-% des Fluor enthaltenden Harzes (a) und 90 bis 10 Gew.-% des modifizierten Ethylenpolymerisats (i) und/oder (ii) umfasst.

3. Zusammensetzung nach Anspruch 1 oder 2, wobei das Fluor enthaltende Harz (a) gewählt wird aus Polyvinylfluoriden und Polyvinylidenfluoriden.

4. Zusammensetzung nach Anspruch 1 oder 2, wobei das Fluor enthaltende Harz (a) eine Mischung aus einem Polyvinylidenfluorid und einem Polymethylmethacrylat ist.

5. Zusammensetzung nach mindestens einem der vorangehenden Ansprüche, wobei das zur Bildung des modifizierten Ethylenpolymerisats (b)(i) verwendete Ethylenpolymerisat eine Kristallinität von 50% oder weniger besitzt.

6. Zusammensetzung nach mindestens einem der vorangehenden Ansprüche, wobei das zur Bildung des modifizierten Ethylenpolymerisats (b)(i) verwendete Ethylenpolymerisat ein Ethylen-Alkylacrylat-Copolymer ist.

7. Zusammensetzung nach Anspruch 6, wobei das Ethylen-Alkylacrylat-Copolymer einen Alkylacrylatgehalt von 15 Gew.-% oder mehr besitzt.

8. Zusammensetzung nach mindestens einem der vorangehenden Ansprüche, wobei das modifizierte Ethylenpolymerisat (b)(i) erhalten wird durch Pfropfreaktion mit einem Methyl- oder Ethylester von Acrylsäure oder Methacrylsäure.

9. Zusammensetzung nach mindestens einem der vorangehenden Ansprüche, wobei das modifizierte Ethylenpolymerisat (b)(i) im wesentlichen gelfrei ist.

10. Zusammensetzung nach mindestens einem der vorangehenden Ansprüche, wobei der Gesamtalkylacrylatgehalt des modifizierten Ethylenpolymerisats (b)(i) 10 bis 65 Gew.-% beträgt.

11. Zusammensetzung nach mindestens einem der vorangehenden Ansprüche, wobei das zur Bildung des modifizierten Ethylenpolymerisats (b)(ii) verwendete Ethylenepolymerisat eine Kristallinität von 10 bis 45% besitzt.

12. Zusammensetzung nach mindestens einem der vorangehenden Ansprüche, wobei das zur Bildung des modifizierten Ethylenpolymerisats (b)(ii) verwendete Ethylenpolymerisat ein Ethylen-Vinylacetat-Copolymer mit einem Vinylacetatgehalt von 20 Gew.-% oder mehr ist.

13. Zusammensetzung nach mindestens einem der Ansprüche 1 bis 11, wobei der Gesamtvinylacetatgehalt des modifizierten Ethylenpolymerisats (b)(ii) 10 bis 65 Gew.-% beträgt.

**Revendications**

1. Composition de résine thermoplastique contenant du fluor, caractérisée en ce que la composition est un mélange contenant

(a) de 5 à 95% en poids de résine thermoplastique contenant du fluor, et

(b) de 95 à 5% en poids d'un polymère éthylénique modifié choisi parmi

(i) un polymère éthylénique modifié obtenu en soumettant un polymère éthylénique et un acrylate d'alkyle à des conditions de réaction de greffage, la teneur totale en acrylate d'alkyle, y compris l'acrylate d'alkyle initialement présent étant de 5 à 70% en poids par rapport au poids du polymère éthylénique modifié; et

(ii) un polymère éthylénique modifié obtenu en soumettant un polymère éthylénique ayant une cristallinité de 4 à 50% et un acétate de vinyle à des conditions de réaction de greffage, la teneur totale en acétate de vinyle, y compris l'acétate de vinyle initialement présent, étant de 5 à 70% en poids par rapport au poids du polymère éthylénique modifié, et la teneur en insoluble dans le xylène bouillant étant de 10% en poids ou moins, par rapport au même polymère éthylénique modifié.

2. Composition selon la revendication 1, caractérisée en ce que le mélange comprend de 10 à 90% en poids de résine contenant du fluor (a), et de 90 à 10% en poids de polymère éthylénique modifié (i) ou (ii).

3. Composition selon la revendication 1 ou 2, caractérisée en ce que la résine contenant du fluor (a) est choisie parmi les fluorures de polyvinyle et les fluorures de polyvinylidène.

4. Composition selon la revendication 1 ou 2, caractérisée en ce que la résine contenant du fluor (a) est un mélange de fluorure de polyvinylidène et de méthacrylate de polyméthyle.

5. Composition selon l'une quelconque des revendications précédentes, caractérisée en ce que le polymère éthylénique utilisé pour former le polymère éthylénique modifié (b)(i) a une cristallinité de 50% ou moins.

6. Composition selon l'une quelconque des revendications précédentes, caractérisée en ce que le polymère éthylénique utilisé pour former le polymère éthylénique modifié (b)(i) est un copolymère éthylène-acrylate d'alkyle.

7. Composition selon la revendication 6, caractérisée en ce que le copolymère éthylène-acrylate a une teneur en acrylate d'alkyle de 15% en poids ou davantage.

8. Composition selon l'une quelconque des revendications précédentes, caractérisée en ce que le polymère éthylénique modifié (b)(i) est obtenu par réaction de greffage avec un ester méthylique ou éthylique d'acide acrylique ou méthacrylique.

9. Composition selon l'une quelconque des revendications précédentes, caractérisée en ce que le polymère éthylénique modifié (b)(i) est pratiquement exempt de gel.

10. Composition selon l'une quelconque des revendications précédentes, caractérisée en ce que la teneur totale en acrylate du polymère éthylénique modifié (b)(i) est de 10 à 65% en poids.

11. Composition selon l'une quelconque des revendications précédentes, caractérisée en ce que le olymère éthylénique utilisé pour former le polymère éthylénique modifié (b)(ii) a une cristallinité de 10 à 45%.

12. Composition selon l'une quelconque des revendications précédentes, caractérisée en ce que le polymère éthylénique utilisé pour former le polymère éthylénique modifié (b)(ii) est un copolymère de vinyle de 20% en poids ou davantage.

13. Composition selon l'une quelconque des revendications 1 à 11, caractérisée en ce que la teneur totale en acétate de vinyle du polymère éthylénique modifié (b)(ii) est de 10 à 65% en poids.